# EUROPEAN PATENT APPLICATION

(11) **EP 3 609 152 A1**
(43) Date of publication of application: **12.02.2020**
(21) Application number: 18781142.7
(22) Date of filing: 28.02.2018
(51) Int. Cl.: H04L 29/06, H04L 12/58

(54) **INTERNET-OF-THINGS AUTHENTICATION SYSTEM AND INTERNET-OF-THINGS AUTHENTICATION METHOD**

(30) Priority: 07.04.2017 CN 201710223657
(71) Applicant: ZTE Corporation, Shenzhen, Guangdong 518057 (CN)
(72) Inventor: CHEN, Andi, Shenzhen Guangdong 518057 (CN)
(74) Representative: Baudler, Ron
(86) International application number: PCT/CN2018/077527
(87) International publication number: WO 2018/184433

(57) **Abstract**

The present disclosure provides an Internet-of-Things authentication system and Internet-of-Things authentication method. The Internet-of-Things authentication system comprises a first user terminal used for receiving an interaction communications request from a user and generating a remote authentication request message carrying second binding relationship information, and sending the remote authentication request message to a first destination device; a first rich communications kit server used, during a process of a first user terminal and/or rich communications account establishing a binding relationship with a first destination device and authenticating the binding relationship, for achieving message forwarding between the first user and the first destination device; the first destination device is used for storing first binding relationship information, receiving a remote authentication request message, and detecting whether the second binding relationship information is consistent with the first binding relationship information; if it is consistent, then authentication is successful, and the first destination device receives the interaction communications request of the first user.

## Description

### FIELD OF THE INVENTION

The present disclosure relates to the technical field of mobile communications and Internet-of-Things, and in particular to, an Internet-of-Things authentication system and an Internet-of-Things authentication method.

### BACKGROUND

With the development of society and the continuous improvement of scientific and technical level, the Internet of Things is widely developed. The rapid growth of the Internet of Things can bring increased various remote services or remote device management scenarios based on interconnection and interaction of people-to-object and object-to-object. However, the security and usability problems associated with user identity authentication and remote identity authentication are also gradually exposed.

In one case, the authentication method using a biometric identification technology can perform identity authentication quickly, securely and accurately. For example, identity authentication using biometric features such as fingerprints, face shapes, and irises has been widely used in smart mobile terminals. However, no effective remote authentication system and method between a user and a device in the Internet-of-Things environment has been proposed yet.

### SUMMARY

The present disclosure provides an Internet-of-Things authentication system and an Internet-of-Things authentication method.

An Internet-of-Things authentication system is provided in an embodiment of the present disclosure, including a first user terminal, a first rich communication suite server and a first target device, wherein the first user terminal is configured to accept an interactive communication request from a user, generate a remote authentication request message carrying second binding relation information, and send the remote authentication request message to the first target device; the first rich communication suite server is configured, during the process of establishing and authenticating a binding relation between the first user terminal and/or a rich communication account and the first target device, to forward a message between the first user terminal and the first target device; and the first target device is configured to store a first binding relation information between the first user terminal and/or the rich communication account and the first target device, receive the remote authentication request message, and detect whether the second binding relation information in the remote authentication request message is consistent with the first binding relation information, wherein under the condition that the second binding relation information in the remote authentication request message is consistent with the first binding relation information, authentication is successful, and the first target device accepts the interactive communication request of the first user terminal.

In an exemplary embodiment, the remote authentication request message carries timestamp information therein; and the first target device is further configured to detect whether the timestamp is overtime when verifying whether the binding relation information in the remote authentication request message is consistent with the stored binding relation information, wherein under the condition that the second binding relation information in the remote authentication request message is consistent with the second binding relation information, and the timestamp is not overtime, authentication is successful.

In an exemplary embodiment, the first user terminal is further configured to require the user to input biometric authentication before generating the remote authentication request message.

In an exemplary embodiment, the biometric authentication is at least one of fingerprint recognition, face recognition, and voice recognition.

In an embodiment of the present disclosure, there is further provided an Internet-of-Things authentication system, including a second user terminal, a second rich communication suite server, a second target device and a third-party server, wherein the second user terminal is configured to accept an interactive communication request from a user, generate a remote authentication request message carrying second binding relation information, and send the remote authentication request message to the second target device; the second rich communication suite server is configured, during the process of establishing and authenticating a binding relation between the second user terminal and/or a rich communication account and the second target device, to forward a message between the second user terminal and the third-party server; the third-party server is configured to store a first binding relation information between the second user terminal and/or the rich communication account and the second target device, receive the remote authentication request message, and verify whether the second binding relation information in the remote authentication request message is consistent with the first binding relation information, wherein under the condition that the second binding relation information in the remote authentication request message is consistent with the first binding relation information, the remote authentication request message is forwarded to the second target device; and the second target device is configured to receive the remote authentication request message, and detect whether target device information in the remote authentication request message is consistent with local information, wherein under the condition that it is consistent with the local information, authentication is successful, and the interactive communication request of the second user terminal is accepted.

In an embodiment of the present disclosure, there is further provided an Internet-of-Things authentication method, including: forwarding, by a first rich communication suite server, a message to enable a first user terminal and/or a rich communication account to be bound with a first target device, and storing first binding relation information in the first target device; sending, by request of the first user terminal, a request for interactive communication with the first target device, generating, by the first user terminal, a remote authentication request message carrying second binding relation information, and sending the remote authentication request message to the first target device; and receiving, by the first target device, the remote authentication request message, verifying whether the second binding relation information in the remote authentication request message is consistent with the first binding relation information, wherein under the condition that the second binding relation information in the remote authentication request message is consistent with the first binding relation information, authentication is successful, and the first target device accepts the interactive communication request of the first user terminal.

In an exemplary embodiment, when the remote authentication request message is sent to the first target device, the remote authentication request message carries timestamp information therein, and the method further includes: detecting whether the timestamp is overtime when verifying whether the second binding relation information in the remote authentication request message is consistent with the first binding relation information, wherein under the condition that the second binding relation information in the remote authentication request message is consistent with the first binding relation information, and the timestamp is not overtime, authentication is successful.

In an exemplary embodiment, the method further includes: encrypting the remote authentication request message when the remote authentication request message is sent to the first target device.

In an exemplary embodiment, when the request for interactive communication with the first target device is sent by the first rich communication suite server, the first user terminal requires a user to input biometric authentication, wherein the first user terminal generates the remote authentication request message under the condition that the biometric authentication is successful.

In an embodiment of the present disclosure, there is further provided an Internet-of-Things authentication method, including: forwarding, by a second rich communication suite server, a message to enable a second user terminal and/or a rich communication account to be bound with a second target device, and storing the first binding relation information in a third-party server; sending, by the second user terminal, a request for interactive communication with the second target device, generating, by the second user terminal, a remote authentication request message carrying second binding relation information, and sending the remote authentication request message to the third-party server; receiving, by the third-party server, the remote authentication request message, and verifying whether the second binding relation information in the remote authentication request message is consistent with the first binding relation information, wherein under the condition that the second binding relation information in the remote authentication request message is consistent with the first binding relation information, the remote authentication request message is forwarded to the second target device; and receiving, by the second target device, the remote authentication request message, and detecting whether target device information in the remote authentication request message is consistent with local information, wherein under the condition that the target device information in the remote authentication request message is consistent with the local information, authentication is successful, and the second target device accepts the interactive communication request of the second user terminal.

### BRIEF DESCRIPTION OF THE DRA WINGS

The drawings described herein are intended to provide a further understanding of the present disclosure and constitute a part of the present disclosure. The exemplary embodiments of the present disclosure and the description thereof are for explaining the present disclosure and do not constitute an undue limitation of the present disclosure. In the drawings:
Fig. 1 is a schematic structural diagram of an Internet-of-Things authentication system according to a first embodiment of the disclosure;
Fig. 2 is a schematic structural diagram of an Internet-of-Things authentication system according to a second embodiment of the disclosure;
Fig. 3 is a schematic flowchart of an Internet-of-Things authentication method according to a first embodiment of the disclosure;
Fig. 4 is a schematic flowchart of an Internet-of-Things authentication method according to a second embodiment of the disclosure;
Fig. 5 is a schematic flowchart of an Internet-of-Things authentication method according to a third embodiment of the disclosure;
Fig. 6 is a schematic flowchart of a binding step in the Internet-of-Things authentication method according to the third embodiment of the disclosure;
Fig. 7 is a schematic flowchart of a signaling step in the Internet-of-Things authentication method according to the third embodiment of the disclosure;
Fig. 8 is a schematic structural diagram of an Internet-of-Things authentication system according to the third embodiment of the disclosure; and
Fig. 9 is a schematic structural diagram of an Internet-of-Things authentication system according to a fourth embodiment of the disclosure.

### DETAILED DESCRIPTION OF THE EMBODIMENTS

For clarity and better understanding of the objects, technical solution and advantages of the disclosure, embodiments of the disclosure will now be described in detail in conjunction with the accompanying drawings. It should be noted that the embodiments of the disclosure and features herein may be combined with each other in any manner as long as they are not contradictory.

The Rich Communication Suite is a technical standard with a unified service set definition built on an IP Multimedia Subsystem (IMS) network promoted by the Global Mobile Telecommunication Alliance (GSMA). RCS implements multimedia services such as voices, messages, status presentations based on a mobile phone directory. A user uses the RCS services through a software client on an intelligent terminal. In some cases, the RCS services may be similar to an instant messaging service such as QQ and WeChat of the internet, and may automatically display an online state of the user by directly using a phone number stored in a mobile phone, thereby performing communications in various manners such as by voices, pictures, videos, and the like in real time. Unless otherwise indicated, the Internet-of-Things authentication system and method according to the embodiments of the present disclosure are implemented based on RCS.

It should be noted that before using the Internet-of-Things authentication method of the present disclosure, the user needs to be an RCS user who is successfully authenticated by an operator real-name authentication mechanism. Then, the user may log in the RCS terminal using his/her RCS user account as an Internet-of-Things account. The message interactions involved in the present disclosure all use signaling channels in an RCS environment. RCS has a better information integration capability and timeliness, as well as a better multimedia presentation capability and excellent user experience. RCS communication also has better security since the user needs to pass the national real-name system authentication of an operator network to register an RCS platform. In a user login scenario on the RCS platform, a Session Initiation Protocol (SIP) device is confirmed and an SIP proxy is authenticated through a REGISTER signaling series flow in the SIP so that a secure signaling interaction channel is effectively established.

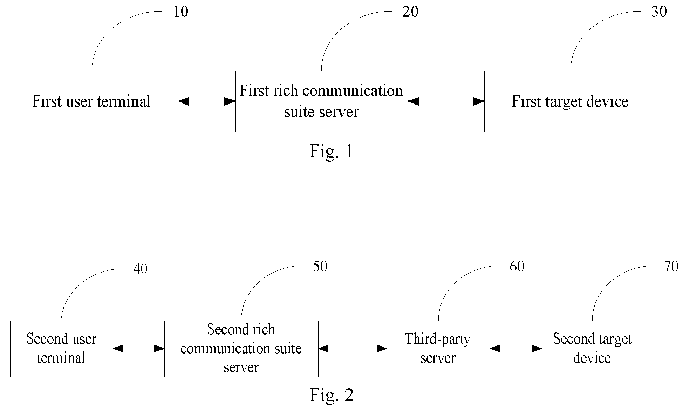

As shown in Fig. 1, the present disclosure provides an Internet-of-Things authentication system, including a first user terminal 10, a first rich communication suite server 20 and a first target device 30, wherein the first user terminal 10 is configured to accept an interactive communication request from a user, generate a remote authentication request message carrying second binding relation information, and send the remote authentication request message to the first target device 30; the first rich communication suite server 20 is configured, during the process of establishing and authenticating a binding relation between the first user terminal 10 and/or a rich communication account and the first target device 30, to forward a message between the first user terminal 10 and the first target device 30; and the first target device 30 is configured to store a first binding relation information between the first user terminal 10 and/or the rich communication account and the first target device 30, receive the remote authentication request message, and detect whether the second binding relation information in the remote authentication request message is consistent with the stored first binding relation information, wherein under the condition that it is detected that the second binding relation information in the remote authentication request message is consistent with the first binding relation information, authentication is successful, and the first target device accepts the interactive communication request of the first user terminal 10.

In an exemplary embodiment, the first rich communication suite server 20 is further configured to establish a binding relation between the first user terminal 10 and the rich communication account in advance.

In an exemplary embodiment, the remote authentication request message carries timestamp information therein; and the first target device 30 is further configured to detect whether the timestamp is overtime when verifying whether the second binding relation information in the remote authentication request message is consistent with the first binding relation information, wherein under the condition that the second binding relation information in the remote authentication request message is consistent with the second binding relation information, and the timestamp is not overtime, authentication is successful.

It should be noted that in the case that the remote authentication request message carries timestamp information therein, the timeout period set by the timestamp may be relatively short, so as to ensure timeliness of the operation and enhance anti-counterfeiting capability of the message.

In an exemplary embodiment, the first user terminal 10 is further configured to require the user to input biometric authentication before generating the remote authentication request message.

It should be noted that biometric identification technology is a convenient and secure authentication manner. Biometric features used for biometric identification may include a hand shape, a fingerprint, a face shape, an iris, a retina, a pulse, and an auricle, for example. Behavioral characteristics may include a signature, a sound, and key strength, for example. In an exemplary embodiment, the biometric authentication includes, but is not limited to, fingerprint recognition, face recognition, and voice recognition.

In an exemplary embodiment, the remote authentication request message is encrypted to be sent.

In an exemplary embodiment, the binding relation established between the first user terminal and/or the rich communication account and the first target device may be established separately in advance before the interactive communication request of the user is accepted, or may be established when the interactive communication request of the user is accepted.

The process of establishing the binding relation between the first user terminal 10 and/or the rich communication account and the first target device 30 includes: generating, by the first user terminal 10, a second binding request message carrying a target device identification code, and sending, by the first rich communication suite server 20, the second binding request message to the first target device 30; and receiving, by the first target device 30, the second binding request message and detecting whether the target device identification code in the second binding request message is consistent with local information, wherein under the condition that the target device identification code in the second binding request message is consistent with the local information, the binding is successful, and the binding request of the first user terminal 10 is accepted.

As shown in Fig. 2, the present disclosure further provides an Internet-of-Things authentication system, including a second user terminal 40, a second rich communication suite server 50, a second target device 70 and a third-party server 60.

The second user terminal 40 is configured to accept an interactive communication request from a user, generate a remote authentication request message carrying second binding relation information, and send the remote authentication request message to the second target device 70.

The second rich communication suite server 50 is configured, during the process of establishing and authenticating a binding relation between the second user terminal and/or a rich communication account and the second target device, to forward a message between the second user terminal 40 and the third-party server 60.

The third-party server 60 is configured to store a first binding relation information between the second user terminal 40 and/or the rich communication account and the second target device 70, receive the remote authentication request message, and verify whether the second binding relation information in the remote authentication request message is consistent with the first binding relation information, wherein under the condition that the second binding relation information in the remote authentication request message is consistent with the first binding relation information, the remote authentication request message is forwarded to the second target device 70.

The second target device 70 is configured to receive the remote authentication request message, and detect whether target device information in the remote authentication request message is consistent with local information, wherein under the condition that the target device information in the remote authentication request message is consistent with the local information, authentication is successful, and the second target device accepts the interactive communication request of the second user terminal 40.

In an exemplary embodiment, the second rich communication suite server 50 is further configured to establish the binding relation between the second user terminal 40 and the rich communication account in advance.

In an exemplary embodiment, the remote authentication request message carries timestamp information therein; the third-party server 60 is further configured to detect whether the timestamp is overtime when verifying whether the second binding relation information in the remote authentication request message is consistent with the first binding relation information, wherein under the condition that the second binding relation information in the remote authentication request message is consistent with the first binding relation information, and the timestamp is not overtime, the remote authentication request message is forwarded to the second target device 70; and the second target device 70 is further configured to detect whether the timestamp is overtime while detecting whether the target device information in the remote authentication request message is consistent with the local information, wherein under the condition that the target device information in the remote authentication request message is consistent with the local information and the timestamp is not overtime, authentication is successful.

In an exemplary embodiment, the second user terminal 40 is further configured to require the user to input biometric authentication before generating the remote authentication request message.

In an exemplary embodiment, the biometric authentication includes, but is not limited to, fingerprint recognition, face recognition, and voice recognition.

In an exemplary embodiment, the remote authentication request message to be sent is encrypted.

In an exemplary embodiment, the third-party server 60 may be an RCS public account server.

In an exemplary embodiment, the binding relation established between the second user terminal and/or the rich communication account and the second target device may be established separately in advance before the interactive communication request of the user is accepted, or may be established when the interactive communication request of the user is accepted.

The process of establishing the binding relation between the second user terminal 40 and/or the rich communication account and the second target device 70 includes: generating, by the second user terminal 40, a binding request message carrying a target device identification code of the second target device 70, and sending, by the second rich communication suite server 50, the binding request message to the third-party server 60; receiving, by the third-party server 60, the binding request message, and detecting whether information of the second target device 70 is prestored, wherein under the condition that the information of the second target device 70 is prestored, the binding request message is sent to the second target device 70; and receiving, by the second target device 70, the binding request message, and detecting whether the target device identification code in the binding request message is consistent with local information, wherein under the condition that the target device identification code in the binding request message is consistent with the local information, binding is successful, and the second target device 70 accepts the binding request of the second user terminal 40.

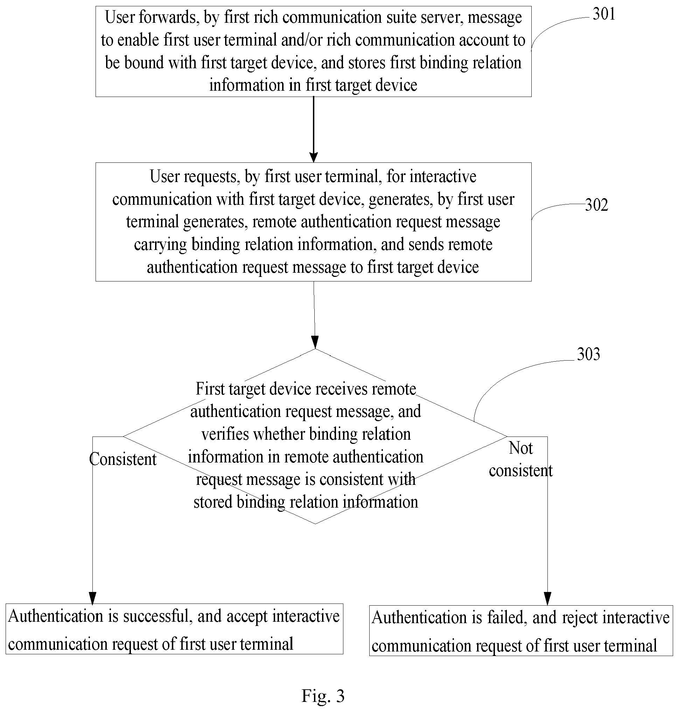

As shown in Fig. 3, the Internet-of-Things authentication method according to the embodiment of the present disclosure includes the following steps 301 to 303.

At step 301, forwarding, by a first rich communication suite server, a message to enable a first user terminal and/or a rich communication account to be bound with a first target device, and storing first binding relation information in the first target device.

At step 302, sending, by the first user terminal, a request for interactive communication with the first target device, generating, by the first user terminal, a remote authentication request message carrying second binding relation information, and sending the remote authentication request message to the first target device via a first rich communication suite server.

At step 303, receiving, by the first target device, the remote authentication request message, verifying whether the second binding relation information in the remote authentication request message is consistent with the first binding relation information, wherein under the condition that the second binding relation information in the remote authentication request message is consistent with the first binding relation information, authentication is successful, and the first target device accepts the interactive communication request of the first user terminal; under the condition that the second binding relation information in the remote authentication request message is not consistent with the first binding relation information, authentication is failed and the first target device rejects the interactive communication request of the first user terminal.

In an exemplary embodiment, before the step 301, the user may establish a binding relation between the first user terminal and the rich communication account in advance through the first rich communication suite server.

In an exemplary embodiment, when the remote authentication request message is sent to the first target device, the remote authentication request message carries timestamp information therein. In an exemplary embodiment, when verifying whether the second binding relation information in the remote authentication request message is consistent with the first binding relation information, the first target device detects whether the timestamp is overtime, wherein under the condition that the second binding relation information in the remote authentication request message is consistent with the first binding relation information, and the timestamp is not overtime, authentication is successful; and under the condition that the second binding relation information in the remote authentication request message is not consistent with the first binding relation information or the timestamp is overtime, authentication is failed.

It should be noted that when the remote authentication request message carries timestamp information, the timeout period set by the timestamp should be relatively short, so as to ensure timeliness of the operation, and enhance anti-counterfeiting capability of the message. In an exemplary embodiment, the step 302 further includes: encrypting the remote authentication request message when the remote authentication request message is sent to the first target device.

In an exemplary embodiment, when the request for interactive communication with the first target device is sent by the first rich communication suite server, the first user terminal requires a user to input biometric authentication, wherein the first user terminal generates the remote authentication request message under the condition that the biometric authentication is successful. In an exemplary embodiment, the biometric authentication includes, but is not limited to, fingerprint recognition, face recognition, and voice recognition.

In an exemplary embodiment, the binding relation established between the first user terminal and/or the rich communication account and the first target device may be established separately in advance before the interactive communication request of the user is accepted, or may be established when the interactive communication request of the user is accepted.

The step of forwarding the message by the first rich communication suite to enable the first user terminal and/or the rich communication account to be bound with the first target device includes: generating, by the first user terminal, a second binding request message carrying a target device identification code, and sending, by the first rich communication suite server, the second binding request message to the first target device; and receiving, by the first target device, the second binding request message, and detecting whether the target device identification code in the second binding request message is consistent with local information, wherein under the condition that the target device identification code in the second binding request message is consistent with the local information, binding is successful, and the first target device accepts the binding request of the first user terminal.

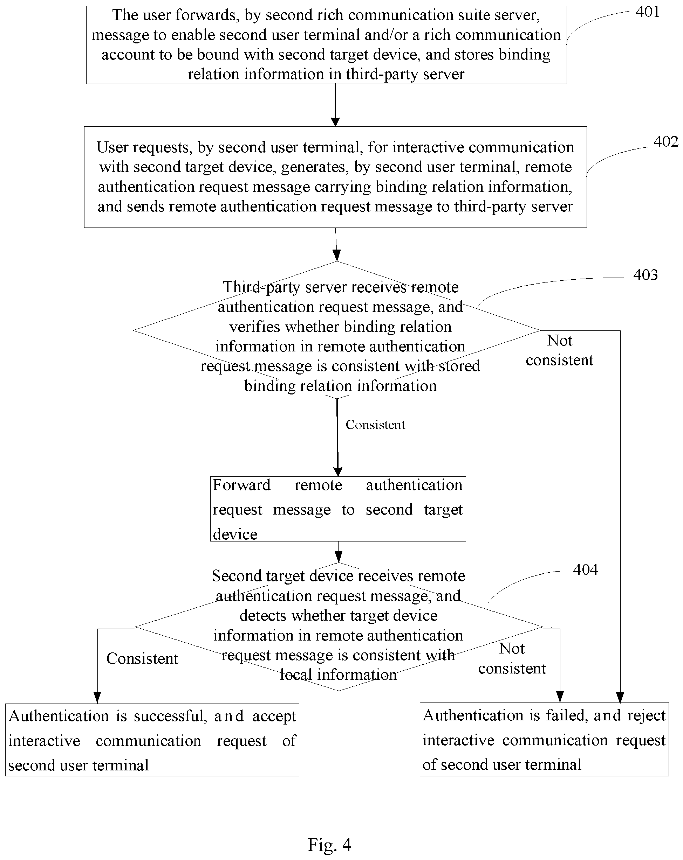

In an exemplary embodiment, as shown in Fig. 4, an Internet-of-Things authentication method according to an embodiment of the present disclosure includes steps 401 to 404.

At step 401, forwarding, by a second rich communication suite server, a message to enable a second user terminal and/or a rich communication account to be bound with a second target device, and storing first binding relation information in a third-party server.

At step 402, sending, by the second user terminal, a request for interactive communication with the second target device, generating, by the second user terminal, a remote authentication request message carrying second binding relation information, and sending the remote authentication request message to the third-party server via the second rich communication suite server.

At step 403, receiving, by the third-party server, the remote authentication request message, and verifying whether the second binding relation information in the remote authentication request message is consistent with the first binding relation information, wherein under the condition that the second binding relation information in the remote authentication request message is consistent with the first binding relation information, the remote authentication request message is forwarded to the second target device; and under the condition that the second binding relation information in the remote authentication request message is not consistent with the first binding relation information, authentication is failed, and the third-party server rejects the interactive communication request of the second user terminal.

At step 404, receiving, by the second target device, the remote authentication request message, and detecting whether target device information in the remote authentication request message is consistent with local information, wherein under the condition that the target device information in the remote authentication request message is consistent with the local information, authentication is successful and the second target device accepts the interactive communication request of the second user terminal; and under the condition that the target device information in the remote authentication request message is not consistent with the local information, authentication is failed and the second target device rejects the interactive communication request of the second user terminal.

In an exemplary embodiment, before the step 401, the user establishes a binding relation between the second user terminal and the rich communication account in advance through the second rich communication suite server.

In an exemplary embodiment, when the remote authentication request message is sent to the third-party server or the second target device, the remote authentication request message carries timestamp information therein. In an exemplary embodiment, the step 403 further includes: detecting whether the timestamp is overtime when verifying whether the second binding relation information in the remote authentication request message is consistent with the first binding relation information by the third-party server, wherein under the condition that the second binding relation information in the remote authentication request message is consistent with the first binding relation information, and the timestamp is not overtime the remote authentication request message is forwarded to the second target device; and under the condition that the second binding relation information in the remote authentication request message is not consistent with the first binding relation information, or the timestamp is overtime, authentication is failed, and the third-party server rejects the interactive communication request of the second user terminal. In an exemplary embodiment, the step 404 further includes: detecting whether the timestamp is overtime while detecting whether the target device information in the remote authentication request message is consistent with the local information by the second target device, wherein under the condition that the target device information in the remote authentication request message is consistent with the local information and the timestamp is not overtime, authentication is successful, and the second target device accepts the interactive communication request of the second user terminal; and under the condition that the target device information in the remote authentication request message is not consistent with the local information, or the timestamp is overtime, authentication is failed, and the second target device rejects the interactive communication request of the second user terminal.

In an exemplary embodiment, the method further includes: encrypting the remote authentication request message when the remote authentication request message is sent to the third-party server or the second target device.

In an exemplary embodiment, when requesting for interactive communication with the second target device via the second user terminal, the second user terminal requires a user to input biometric authentication, wherein the second user terminal generates the remote authentication request message under the condition that the biometric authentication is successful.

In an exemplary embodiment, the biometric authentication includes, but is not limited to, fingerprint recognition, face recognition, or voice recognition.

In an exemplary embodiment, the binding relation established between the second user terminal and/or the rich communication account and the second target device may be established separately in advance before the interactive communication request of the user is accepted, or may be established when the interactive communication request of the user is accepted.

The process of establishing the binding relation between the second user terminal and/or the rich communication account and the second target device includes: generating, by the second user terminal, a second binding request message carrying a target device identification code, and sending, by the second rich communication suite server, the second binding request message to the third-party server; receiving, by the third-party server, the binding request message, and detecting whether information of the second target device is prestored, wherein under the condition that the information of the second target device is prestored, the second binding request message is sent to the second target device; and receiving, by the second target device, the binding request message, and detecting whether the target device identification code in the second binding request message is consistent with local information, wherein under the condition that the target device identification code in the second binding request message is consistent with the local information, binding is successful, and the second target device accepts the binding request of the second user terminal .

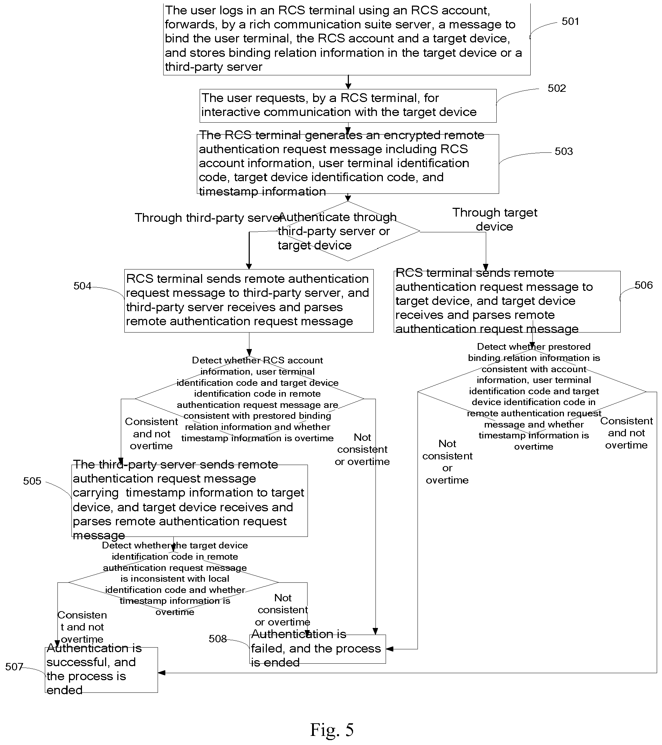

In an exemplary embodiment of the present disclosure, as shown in Fig. 5, the Internet-of- Things authentication method includes the following steps 501 to 508.

At step 501, logging in an RCS terminal using an RCS account, forwarding, by a rich communication suite server, a message to bind the user terminal, the RCS account and a target device, and storing binding relation information in the target device or a third-party server.

At step 502, sending, by the RCS terminal, a request for interactive communication with the target device.

At step 503, generating, by the RCS terminal, an encrypted remote authentication request message including RCS account information, a user terminal identification code, a target device identification code, and timestamp information, wherein under the condition that the binding relation information is stored in the a third-party server, proceed to step 504; and under the condition that the binding relation information is stored in the target device, proceed to step 506.

At step 504, sending, by the RCS terminal, the remote authentication request message to the third-party server, receiving and parsing, by the third-party server, the remote authentication request message, and detecting whether the RCS account information, the user terminal identification code and the target device identification code in the remote authentication request message are consistent with the prestored binding relation information and whether timestamp information is overtime, wherein under the condition that the RCS account information, the user terminal identification code and the target device identification code in the remote authentication request message are consistent with the prestored binding relation information and the timestamp is not overtime, proceed to step 505; and under the condition that the RCS account information, the user terminal identification code and the target device identification code in the remote authentication request message are not completely consistent with the prestored binding relation information, or the timestamp is overtime, proceed to step 508.

At step 505, sending, by the third-party server, the remote authentication request message carrying the timestamp information to the target device, receiving and parsing, by the target device, the remote authentication request message, and detecting whether the target device identification code in the remote authentication request message is inconsistent with the local identification code and whether the timestamp information is overtime, wherein under the condition that the target device identification code in the remote authentication request message is consistent with the local identification code and the timestamp is not overtime, proceed to step 507; and under the condition that the target device identification code in the remote authentication request message is not consistent with the local identification code, or the timestamp is overtime, proceed to step 508.

At step 506, sending, by the RCS terminal, the remote authentication request message to the target device, receiving and parsing, by the target device, the remote authentication request message, and detecting whether the RCS account information, the user terminal identification code and the target device identification code in the remote authentication request message are consistent with the prestored binding information and whether timestamp information is overtime, wherein under the condition that the RCS account information, the user terminal identification code and the target device identification code in the remote authentication request message are consistent with the prestored binding information and the timestamp is not overtime, proceed to step 507; and under the condition that the RCS account information, the user terminal identification code and the target device identification code in the remote authentication request message are not completely consistent with the prestored binding information or the timestamp information is overtime, proceed to step 508.

At step 507, determining that the authentication is successful, and enabling the target device to accept the interactive communication request of the user.

At step 508, determining that the authentication is failed, and enabling the target device to reject the interactive communication request of the user.

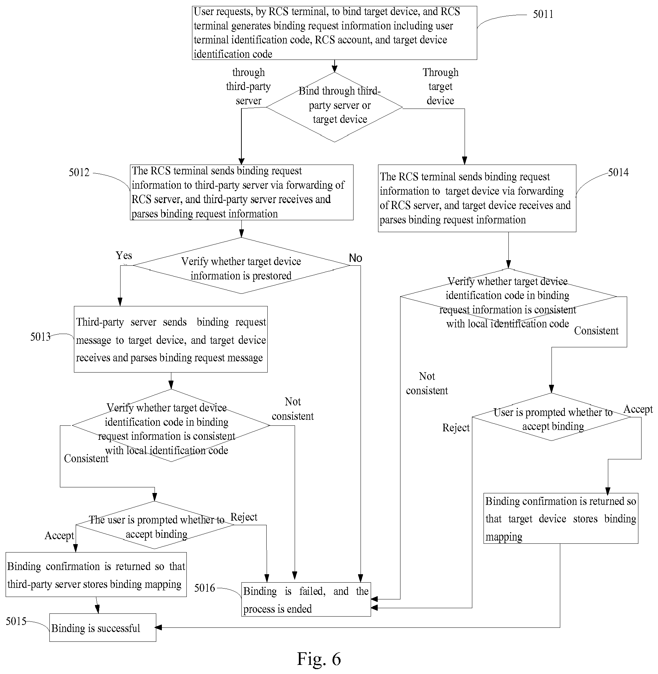

In an exemplary embodiment of the present disclosure, as shown in Fig. 6, the step of forwarding, by the rich communication suite server, the message to bind the user terminal, the RCS account and the target device includes the following steps.

At step 5011, requesting, by the RCS terminal, to bind the target device to make the RCS terminal generate binding request information including a user terminal identification code, an RCS account, and a target device identification code, wherein under the condition that the binding is performed through a third-party server, proceed to step 5012; and under the condition that the binding is performed through the target device, proceed to step 5014.

At step 5012, sending, by the RCS server, the binding request information to the third-party server, and receiving and parsing, by the third-party server, the binding request information, and verifying whether the target device information is prestored, wherein under the condition that the target device information is prestored, proceed to step 5013; and under the condition that the target device information is not prestored, proceed to step 5016.

At step 5013, sending, by the third-party server, the binding request information to the target device, and receiving, by the target device, the binding request information, and verifying whether the target device identification code in the binding request information is consistent with local identification code, wherein under the condition that the target device identification code in the binding request information is consistent with the local identification code, the user is prompted to accept the binding or not, and under the condition that the user accepts the binding, a binding confirmation is returned so that the third-party server stores a binding mapping, and then proceed to step 5015; and under the condition that the target device identification code in the binding request information is not consistent with the local identification code or the user rejects the binding, proceed to step 5016.

At step 5014, sending, by the RCS server, the binding request information to the target device, and receiving and parsing, by the target device, the binding request information, and verifying whether the target device identification code in the binding request information is consistent with local identification code, wherein under the condition that the target device identification code in the binding request information is consistent with the local identification code, the user is prompted to accept the binding or not, and under the condition that the user accepts the binding, binding confirmation is returned so that the target device stores a binding mapping, and then proceed to step 5015; and under the condition that the target device identification code in the binding request information is not consistent with the local identification code or the user rejects the binding, proceed to step 5016.

At step 5015, determining that the binding is successful.

At step 5016, determining that the binding is failed.

In an exemplary embodiment, under the condition that the target device is an RCS terminal, the target device may require the user to input biometric authentication. Under the condition that the biometric authentication is successful, the user is prompted whether to accept the binding. Under the condition that the biometric authentication is failed, proceed to step 5016.

In an exemplary embodiment, for example, the target device identification code or the user terminal identification code may be a Medium Access Control (MAC) address, a Universally Unique Identifier (UUID), a Mobile Station International SDN (MSISDN), or an International Mobile Subscriber Identification Number (IMSI) of the target device or the user terminal.

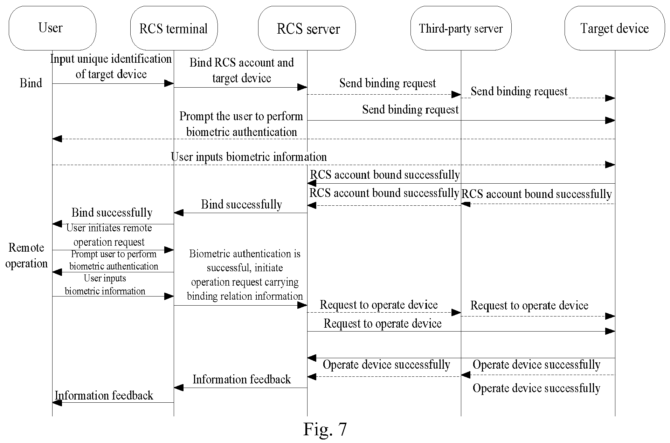

The signaling flow between the various network element modules in the embodiment is shown in Fig. 7. In Fig. 7, when a user initiates an instruction to bind the target device, the user inputs a unique identification of the target device. The RCS terminal generates a binding request message for binding the RCS account and the target device, and forwards the binding request message to the third-party server or the target device through the RCS server. When a user initiates a request for remotely operating the target device, the RCS terminal accepts the remote operation request of the user and generates a remote operation request instruction carrying binding relation information. Under the condition that the binding relation information is stored in the target device, the RCS terminal sends the remote operation request instruction to the target device through the RCS server. After receiving the remote operation request instruction, the target device verifies the binding relation information therein. Under the condition that the verification is successful, a remote operation instruction of the user is accepted. Under the condition that the binding relation information is stored in the third-party server, the RCS terminal sends the remote operation request instruction to the third-party server through the RCS server. After receiving the remote operation request instruction, the third-party server verifies the binding relation information therein. Under the condition that the verification is successful, a remote operation instruction is sent to the target device. The target device verifies whether the target device identification code is consistent with the local identification code. Under the condition that the target device identification code is consistent with the local identification code, the target device accepts the remote operation instruction of the user.

It should be noted that the user terminal described in the present disclosure includes, but is not limited to, a mobile communication device such as a mobile phone, a tablet personal computer (PAD), and the like with an RCS application. The target device described above has at least the capability of parsing SIP signaling in a networking way. The RCS server may carry a variety of public account services, providing capabilities including, but not limited to, messaging, message querying, and modification based on SIP signaling. The third-party server has independent storage and logic processing capabilities, is interconnected with the RCS server and can further interact with an RCS user.

The present disclosure is further explained by providing several preferred embodiments, but it is to be noted that the preferred embodiments are only for the purpose of better describing the disclosure and are not to be construed as unduly limitations to the disclosure. The following embodiments may exist independently, and technical features in different embodiments may be combined together in one embodiment.

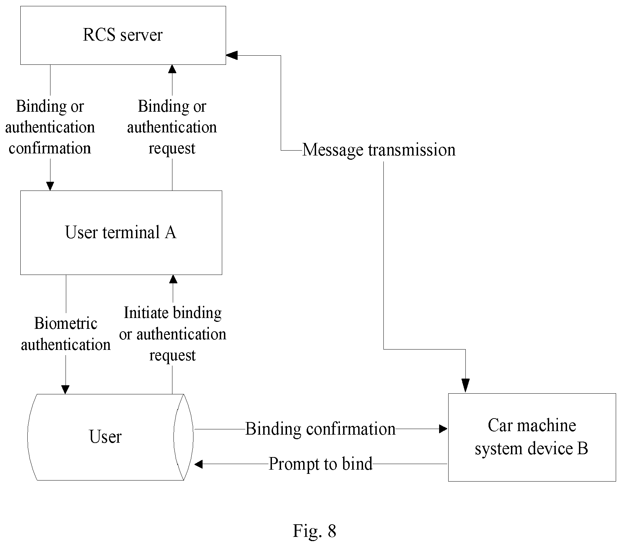

In one example, as shown in Fig. 8, a user terminal A is provided with a fingerprint recognition system (e.g., a conventional smart phone). The user terminal A is provided with RCS terminal software. The user is an RCS user. The user needs to remotely start a car machine system device B through the user terminal A, and the car machine system device B may simply parse the SIP signaling and is provided with a database for storing binding information. The user terminal A and the car machine system device B can realize information interaction through the RCS platform.
(1) The user logs in the RCS system of the user terminal A to initiate a binding request.
(2) The user terminal A prompts the user to authenticate the fingerprint and inputs a unique identification code (such as an engine number) of the device B, wherein under the condition that the fingerprint authentication is successful, the user terminal A sends an encrypted binding instruction carrying the unique identification code (such as a mobile phone UUID or ISDN) of the user terminal A, the unique identification code of the device B and a user RCS account to the device B via the forwarding of an RCS server. Then, proceed to step (3). Under the condition that the fingerprint authentication is failed, the user is prompted that the identity of the user has a problem, and the process is ended.
(3) The device B receives and decrypts the encrypted binding instruction, displays information of the user terminal A and the user RCS account, and prompts the user whether to accept binding. The user operates the device B to perform binding confirmation so that the device B binds the user RCS account, the unique identification code of the user terminal A and the unique identification code of the device B.
(4) After the binding is finished, a binding completion message is sent to the user terminal A. At this time, the user may initiate an instruction to start the device B through a remote authentication module of the user terminal A.
(5) The user terminal A requests the user to input a fingerprint for identity authentication.
(6) Under the condition that the identity authentication is successful, the user terminal A sends an encrypted starting request carrying a timestamp, a user RCS account and a unique identification code of the user terminal A to the device B through the forwarding of the RCS server. Then, proceed to step (7). Under the condition that the identity authentication is failed, the user terminal A prompts that the user identity is abnormal and ends the process.
(7) The device B decrypts the starting request, checks that the timestamp is not overtime, and verifies whether the user RCS account, the unique identification code of the user terminal A and the unique identification code of the device B are consistent with the stored binding information. Under the condition that the verification is successful, the device B starts a vehicle engine; and under the condition that the verification is failed, the device B ignores the request.

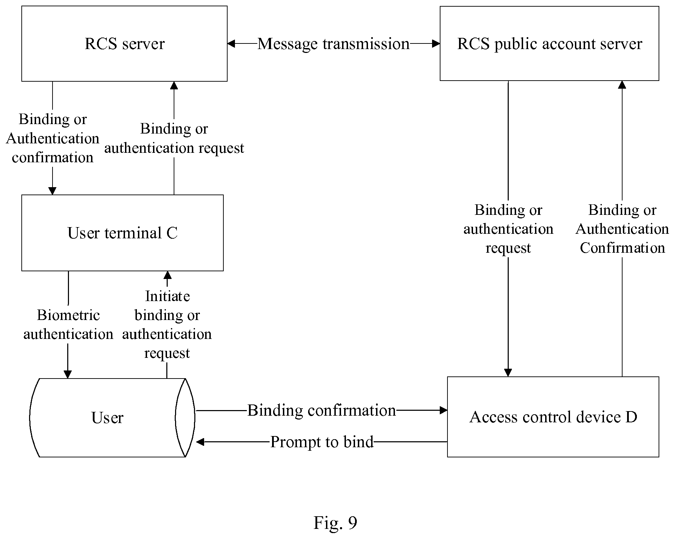

In one example, as shown in Fig. 9, a user terminal C is provided with a fingerprint recognition system. The user terminal C is provided with RCS terminal software. The user is an RCS user. The user needs to open an access control device D remotely through the user terminal C, and the access control system device D can simply parse the SIP signaling.
(a) The user logs in the RCS system on the user terminal C and enters the RCS public account server of the access control device D.
(b) The user initiates a binding request, and a user terminal C prompts the user to carry out fingerprint authentication. The user inputs a unique identification code (such as a network module MAC address) of the access control device D to initiate the binding. Under the condition that the authentication is successful, the user terminal C sends a binding initiating instruction to the RCS public account server through the forwarding of the RCS server. Then, proceed to step (c). Under the condition that the authentication is failed, the user terminal C prompts that the user identity is abnormal and ends the process.
(c) The RCS public account server decrypts the information and confirms whether an access control device D exists. Under the condition that the access control device D exists, confirmation information is sent to the access control device D. The access control device D prompts the user whether to accept the binding so that the user operates the access control device D to perform binding confirmation. After conformation by the user, the public account system binds the user RCS account, the unique identification code of the user terminal C and the unique identification code of the access control device D. Then, proceed to step (d). Under the condition that the device D does not exist or the user rejects to bind the device D, the process at the user terminal C is ended.
(d) After the binding is finished, the user initiates an unlocking instruction through a remote authentication module of the user terminal C.
(e) The user terminal C requests the user to input a fingerprint for identity authentication.
(f) Under the condition that the identity authentication is successful, the user terminal C sending an encrypted unlocking request carrying a timestamp, a user RCS account, a unique identification code of the user terminal C and a unique identification code of the access control device D to the RCS public account server through the forwarding of the RCS server. Then, proceed to step (g). Under the condition that the identity authentication is failed, the user terminal C prompts that the user identity is abnormal and ends the process.
(g) The RCS public account server decrypts the unlocking request, checks that the timestamp is not overtime, and verifies whether the user RCS account, the unique identification code of the user terminal C and the unique identification code of the access control device D are consistent with the stored binding information. If consistent, an encrypted unlocking instruction carrying the timestamp and the unique identification code of the access control device D are sent to the access control device D. Then, proceed to step (h). Under the condition that the verification is inconsistent or the timestamp is overtime, the user terminal C prompts that the user identity is abnormal and ends the process.
(h) After decrypting the unlocking request, the access control device D checks whether the timestamp is overtime, and verifies whether the unique identification code in the unlocking instruction is consistent with the unique identification code of the device. If consistent, the access control device D is unlocked; and If not, the request is ignored.

In one example, the user terminal E is provided with a fingerprint recognition system. The user terminal E is provided with RCS terminal software. The user is an RCS user. The user needs to unlock the terminal device F remotely via the user terminal E. The terminal device F is preinstalled with an RCS software client and logs in an RCS account.
(i) The user terminal E logs in the RCS system and is bound with the terminal device F.
(ii) The user terminal E prompts the user to carry out fingerprint authentication; wherein under the condition that the fingerprint authentication is successful, the user terminal E sends an encrypted binding instruction carrying the unique the user RCS account of the user terminal E to the terminal device F via the forwarding of an RCS server; and under the condition that the fingerprint authentication is failed, the user terminal E prompts that the user identity is abnormal and ends the process.
(iii) The terminal device F receives and decrypts the binding instruction, displays the binding instruction of the user terminal E, and prompts the user whether to accept the binding.
(iv) The terminal device F requests the user to input a fingerprint to perform identification verification. Under the condition that the identify verification is successful and the binding is accepted, the terminal device F sends binding receipt information to the user terminal E, and records the authorized user information of the user terminal E. Then, proceed to step (v). Under the condition that the identity verification is failed or the binding is rejected, the process at the user terminal E is ended.
(v) The user terminal E records the binding information of the terminal device F through the binding receipt information, wherein the user may see the terminal device F in the unlocked device list; and the user initiates a starting instruction to the terminal device F through a remote authentication module of the user terminal E.
(vi) The user terminal E requests the user to input a fingerprint for identity authentication.
(vii) Under the condition that the identity authentication is successful, the user terminal E sends an encrypted starting request carrying the timestamp and the user RCS account of the user terminal E to the terminal device F through the forwarding of the RCS server. Then, proceed to step (viii). Under the condition that the identity authentication is failed, it is prompted that the user identity has a problem, and the process is ended.
(viii) The terminal device F decrypts the starting request, checks that the timestamp is not overtime, and verifies whether the user information in the starting request is an authorized user. Under the condition that the verification is successful, the terminal device F is unlocked, and under the condition that the verification is failed, the starting request is ignored.

According to the Internet-of-Things authentication system and the Internet-of-Things authentication method of the present disclosure, a remote authentication instruction is initiated through the RCS account, and the remote authentication is performed via the Rich Communication Suite (RCS) server. Anti-counterfeiting of the instruction is based on an RCS security signaling channel, and remote authentication is carried out by detecting the initiator device, the opposite device and the RCS account information. By means of the timeliness, security and standardability of the RCS service, secure interactions of user-device, and device-device in an Internet-of-Things environment is conveniently and effectively achieved.

The present disclosure effectively combines the traditional biometric identification with a new RCS rich communication mode, gives full play to the advantages of the biometric identification system and the RCS rich communication, thereby effectively avoiding analysis of a server biological information algorithm, and reducing pressure on server authentication. On one hand, by applying the biometric authentication mode to the Internet-of- Things, the learning cost of the user is reduced, and secure authentication of people and things, and things and things, are effectively realized. On the other hand, the authentication information is transmitted in a unified signaling interaction mode, an interaction scheme is unified, and a unified remote authentication module is realized, thereby urging various equipment manufacturers to reduce development cost and deploy a secure authentication environment efficiently. Meanwhile, the viscosity of the user is greatly improved by expanding functions of the RCS module.

One of ordinary skill in the art will appreciate that all or part of the steps described above may be implemented by a program stored in a computer readable storage medium for instructing the associated hardware, such as a read-only memory, a magnetic or optical disk, and the like. Optionally, all or part of the steps in the above embodiments may also be implemented by one or more integrated circuits. Accordingly, respective modules/units in the above embodiments may be implemented in the form of hardware, or in the form of a software function module. The present disclosure is not limited to any particular combination form of hardware and software.

The descriptions above are only the example embodiments of the present disclosure, which are not used to restrict the present disclosure. For those skilled in the art, the present disclosure may have various changes and variations. Any amendments, equivalent substitutions, and improvements within the spirit and principle of the disclosure are all included in the scope of the protection defined by the appended claims of the disclosure.

## Claims

1. An Internet-of-Things authentication system, including a first user terminal, a first rich communication suite server and a first target device, wherein
the first user terminal is configured to accept an interactive communication request from a user, generate a remote authentication request message carrying second binding relation information, and send the remote authentication request message to the first target device;
the first rich communication suite server is configured, during the process of establishing and authenticating a binding relation between the first user terminal and/or a rich communication account and the first target device, to forward a message between the first user terminal and the first target device;
the first target device is configured to store a first binding relation information between the first user terminal and/or the rich communication account and the first target device, receive the remote authentication request message, and detect whether the second binding relation information in the remote authentication request message is consistent with the first binding relation information, wherein under the condition that the second binding relation information in the remote authentication request message is consistent with the first binding relation information, authentication is successful, and the first target device accepts the interactive communication request of the first user terminal.

2. The Internet-of-Things authentication system according to claim 1, wherein the remote authentication request message carries timestamp information therein; and
the first target device is further configured to detect whether the timestamp is overtime when verifying whether the binding relation information in the remote authentication request message is consistent with the stored binding relation information, wherein under the condition that the second binding relation information in the remote authentication request message is consistent with the second binding relation information, and the timestamp is not overtime, authentication is successful.

3. The Internet-of-Things authentication system according to claim 1, wherein the first user terminal is further configured to require the user to input biometric authentication before generating the remote authentication request message.

4. The Internet-of-Things authentication system according to claim 3, wherein the biometric authentication includes at least one of fingerprint recognition, face recognition, and voice recognition.

5. An Internet-of-Things authentication system, including a second user terminal, a second rich communication suite server, a second target device and a third-party server, wherein
the second user terminal is configured to accept an interactive communication request from a user, generate a remote authentication request message carrying second binding relation information, and send the remote authentication request message to the second target device;
the second rich communication suite server is configured, during the process of establishing and authenticating a binding relation between the second user terminal and/or a rich communication account and the second target device, to forward a message between the second user terminal and the third-party server;
the third-party server is configured to store a first binding relation information between the second user terminal and/or the rich communication account and the second target device, receive the remote authentication request message, and verify whether the second binding relation information in the remote authentication request message is consistent with the first binding relation information, wherein under the condition that the second binding relation information in the remote authentication request message is consistent with the first binding relation information, the remote authentication request message is forwarded to the second target device; and
the second target device is configured to receive the remote authentication request message, and detect whether target device information in the remote authentication request message is consistent with local information, wherein under the condition that the target device information in the remote authentication request message is consistent with the local information, authentication is successful, and the second target device accepts the interactive communication request of the second user terminal.

6. The Internet-of-Things authentication system according to claim 5, wherein the remote authentication request message carries timestamp information therein;
the third-party server is further configured to detect whether the timestamp is overtime when verifying whether the second binding relation information in the remote authentication request message is consistent with the first binding relation information, wherein under the condition that the second binding relation information in the remote authentication request message is consistent with the first binding relation information, and the timestamp is not overtime, the remote authentication request message is forwarded to the second target device; and
the second target device is further configured to detect whether the timestamp is overtime while detecting whether the target device information in the remote authentication request message is consistent with the local information, wherein under the condition that the target device information in the remote authentication request message is consistent with the local information and the timestamp is not overtime, authentication is successful.

7. An Internet-of- Things authentication method, including:
forwarding, by a first rich communication suite server, a message to enable a first user terminal and/or a rich communication account to be bound with a first target device, and storing first binding relation information in the first target device;
sending, by the first user terminal, a request for interactive communication with the first target device, generating, by the first user terminal, a remote authentication request message carrying second binding relation information, and sending the remote authentication request message to the first target device; and
receiving, by the first target device, the remote authentication request message, and verifying whether the second binding relation information in the remote authentication request message is consistent with the first binding relation information, wherein under the condition that the second binding relation information in the remote authentication request message is consistent with the first binding relation information, authentication is successful, and the first target device accepts the interactive communication request of the first user terminal.

8. The Internet-of-Things authentication method according to claim 7, wherein
when the remote authentication request message is sent to the first target device, the remote authentication request message carries timestamp information therein, and
the method further includes: detecting whether the timestamp is overtime when verifying whether the second binding relation information in the remote authentication request message is consistent with the first binding relation information, wherein under the condition that the second binding relation information in the remote authentication request message is consistent with the first binding relation information, and the timestamp is not overtime, authentication is successful.

9. The Internet-of-Things authentication method according to claim 7, further including: encrypting the remote authentication request message when the remote authentication request message is sent to the first target device.

10. The Internet-of- Things authentication method according to claim 7, wherein when the request for interactive communication with the first target device is sent by the first rich communication suite server, the first user terminal requires a user to input biometric authentication, wherein the first user terminal generates the remote authentication request message under the condition that the biometric authentication is successful.

11. An Internet-of- Things authentication method, including:
forwarding, by a second rich communication suite server, a message to enable a second user terminal and/or a rich communication account to be bound with a second target device, and storing first binding relation information in a third-party server;
sending, by the second user terminal, a request for interactive communication with the second target device, generating, by the second user terminal, a remote authentication request message carrying second binding relation information, and sending the remote authentication request message to the third-party server;
receiving, by the third-party server, the remote authentication request message, and verifying whether the second binding relation information in the remote authentication request message is consistent with the first binding relation information, wherein under the condition that the second binding relation information in the remote authentication request message is consistent with the first binding relation information, the remote authentication request message is forwarded to the second target device; and
receiving, by the second target device, the remote authentication request message, and detecting whether target device information in the remote authentication request message is consistent with local information, wherein under the condition that the target device information in the remote authentication request message is consistent with the local information, authentication is successful, and the second target device accepts the interactive communication request of the second user terminal.

12. The Internet-of-Things authentication method according to claim 11, wherein when the remote authentication request message is sent to the third-party server, the remote authentication request message carries timestamp information therein,
the method further includes: detecting whether the timestamp is overtime when verifying whether the second binding relation information in the remote authentication request message is consistent with the first binding relation information by the third-party device, wherein under the condition that the second binding relation information in the remote authentication request message is consistent with the first binding relation information, and the timestamp is not overtime, authentication is successful; and
detecting whether the timestamp is overtime while detecting whether the target device information in the remote authentication request message is consistent with the local information by the second target device, wherein under the condition that the target device information in the remote authentication request message is consistent with the local information and the timestamp is not overtime, authentication is successful, and the second target device accepts the interactive communication request of the second user terminal.

13. The Internet-of- Things authentication method according to claim 11, further including: encrypting the remote authentication request message when the remote authentication request message is sent to the third-party server.

14. The Internet-of- Things authentication method according to claim 11, wherein when the request for interactive communication with the third-party device is sent by the second rich communication suite server, the second user terminal requires a user to input biometric authentication, wherein the second user terminal generates the remote authentication request message under the condition that the biometric authentication is successful.
